(19) Europäisches Patentamt / European Patent Office / Office européen des brevets

(11) **EP 1 113 289 B1**

(12) **FASCICULE DE BREVET EUROPEEN**

(45) Date de publication et mention
de la délivrance du brevet:
**21.02.2007 Bulletin 2007/08**

(51) Int Cl.:
*G01S 7/40* *(2006.01)*     *G01S 13/34* *(2006.01)*

(21) Numéro de dépôt: **00403641.4**

(22) Date de dépôt: **21.12.2000**

(54) **Méthode d'étalonnage d'un radioaltimètre de type FM/CW et radioaltimètre conçu pour la mise en oeuvre de cette méthode**

Verfahren zum Kalibrieren eines FMCW Radarhöhenmessers und Radarhöhenmesser zur Durchführung des Verfahrens

Method of calibrating a FMCW radio altimeter and radio altimeter for carrying out said method

(84) Etats contractants désignés:
**DE FR GB IT SE**

(30) Priorité: **30.12.1999 FR 9916768**

(43) Date de publication de la demande:
**04.07.2001 Bulletin 2001/27**

(73) Titulaire: **Thales**
**75008 Paris (FR)**

(72) Inventeur: **Orlandi, Fabrice,**
**Thomson-CSF Propriete Int.**
**94117 Arcueil Cedex (FR)**

(56) Documents cités:
**EP-A- 0 667 536        DE-A- 19 713 967**
**FR-A- 2 750 766        US-A- 5 757 311**

• **KHANIFAR A ET AL: "MICROWAVE SCATTEROMETRY IN SUPPORT OF SPACE-BORNE SCIENTIFIC MISSIONS" ELECTRONICS AND COMMUNICATION ENGINEERING JOURNAL,GB,INSTITUTION OF ELECTRICAL ENGINEERS, LONDON, vol. 6, no. 6, 1 décembre 1994 (1994-12-01), pages 281-288, XP000491934 ISSN: 0954-0695**

**Description**

L'invention concerne les radioaltimètres de type FM/CW, où FM/CW est un sigle de la littérature anglosaxonne correspondant à "frequency modulation/continuous wave". Ces radioaltimètres émettent périodiquement une onde continue modulée linéairement en fréquence entre deux valeurs limites, c'est-à-dire une onde en dents de scie. Lorsque cette onde est reçue par le radioaltimètre après avoir été réfléchie par le sol, elle présente par rapport à l'onde émise un retard 2h/c ou h est la hauteur du radioaltimètre par rapport au sol et c la vitesse de la lumière ; la modulation étant linéaire ce retard est proportionnel à la fréquence de battement, f, obtenue par mélange du signal d'émission et du signal de réception ; connaissant la différence dF entre les deux valeurs limites et la durée Td de la modulation pour passer d'une valeur limite à l'autre, il est alors possible de calculer la hauteur h par la formule

$$h = Td.f.c/2.dF$$

En réalité le mélange des ondes émise et reçue ne donne pas que la fréquence de battement ; il donne tout un spectre de fréquences dont différents procédés de traitement permettent d'extraire la fréquence représentative de la hauteur à mesurer ; un tel procédé est par exemple décrit dans le brevet français 2 750 766.

Mais dans ces radioaltimètres connus rien ne permet, hormis en utilisant un banc de test, d'effectuer un étalonnage pour vérifier si les hauteurs mesurées par le radioaltimètre sont exactes. Or il serait utile de pouvoir faire une telle vérification et cela, même en cours de fonctionnement du radioaltimètre.

Le brevet EP-A- 0 667536 divulgue un procédé d'étalonnage pour un radar FM/CW par l'injection, au moyen d'un coupleur directif, d'un signal de test dans la liaison entre l'antenne de réception et le mélangeur. Le signal de test est obtenu, par un ensemble de mélangeurs et coupleurs d'un oscillateur auxiliaire et du oscillateur linéaire.

La présente invention a pour but de proposer une méthode qui, au prix d'une adaptation de relativement faible importance de l'électronique du radioaltimètre, autorise à tout moment un étalonnage précis.

Ceci est obtenu en produisant dans le radioaltimètre, en plus du signal d'émission, un pseudo signal de réception et en contrôlant la valeur de la pseudo hauteur mesurée par le radioaltimètre relativement à ce pseudo signal.

Selon l'invention il est proposé pour cela une méthode d'étalonnage conçue pour un radioaltimètre de type FM/CW comportant un oscillateur produisant une onde modulée linéairement en fréquence pour fournir un signal en dents de scie, avec une liaison vers une antenne d'émission, un circuit mélangeur avec deux liaisons respectivement vers l'oscillateur et vers une antenne de réception et un organe de traitement pour traiter les signaux de sortie du circuit mélangeur, caractérisée en ce qu'elle consiste à injecter, dans la liaison entre l'antenne de réception et le mélangeur, un signal auxiliaire en dents de scie de pente de dents de scie, Td/dF, programmable numériquement, dont les dents de scie sont synchrones de celles de l'oscillateur linéaire et dont le palier des dents de scie est décalé d'une valeur, f, donnée par rapport au palier des dents de scie de l'oscillateur linéaire, à obtenir, par modification, ou non, de la durée de modulation des dents de scie ou du dF de l'oscillateur linéaire un battement à la fréquence f entre les dents de scie de l'oscillateur et du signal auxiliaire de façon que l'organe de traitement fournisse une hauteur mesurée h', et à comparer cette hauteur mesurée avec la hauteur étalon obtenue par le calcul selon la formule h = f.c.Td/dF.2, où c est la vitesse de la lumière.

Il est également proposé un radioaltimètre de type FM/CW comportant d'une part, en série, un organe de commande, un oscillateur produisant une onde modulée linéairement en fréquence et des premiers éléments de couplage pour coupler l'oscillateur à une antenne d'émission et d'autre part un circuit mélangeur avec une première entrée couplée à l'oscillateur linéaire et une seconde entrée, des seconds éléments de couplage pour coupler une antenne de réception à la seconde entrée du circuit mélangeur et un organe de traitement pour traiter les signaux de sortie du circuit mélangeur, caractérisé en ce que, pour effectuer un étalonnage du radioaltimètre, il comporte un oscillateur linéaire auxiliaire et un coupleur directif en série, l'oscillateur auxiliaire étant commandé par l'organe de commande et le coupleur étant inséré dans les seconds éléments de couplage) adapté à fournir un signal en dents de scie de pente de dents de scie étant décalé d'une valeur, f, donnée par rapport au palier des dents de scie de l'oscillateur produisant une onde modulée linéairement en fréquence, l'oscillateur et l'oscillateur étant adaptés pour obtenir, par modification, ou non, de la durée de modulation des dents de scie ou du dF de l'oscillateur un battement à la fréquence f entre les dents de scie de l'oscillateur et du signal auxiliaire de façon que l'organe de traitement fournisse une hauteur mesurée h', cette hauteur étant comparée avec la hauteur étalon obtenue par le calcul selon la formule h = f.c.Td/dF.2 où c est la vitesse de la lumière et un coupleur directif en série, l'oscillateur auxiliaire étant commandé par l'organe de commande et le coupleur étant inséré dans les seconds éléments de couplage.

La présente invention sera mieux comprise et d'autres caractéristiques apparaîtront à l'aide de la description ci-après et des figures s'y rapportant qui représentent :

- la figure 1, un radioaltimètre selon l'art antérieur,
- la figure 2, un graphique relatif aux ondes émise et reçue par les radioaltimètres qui sont décrits dans ce document,
- la figure 3, un radioaltimètre selon l'invention,
- les figures 4 à 6, des graphiques relatifs au radioaltimètre selon la figure 3.

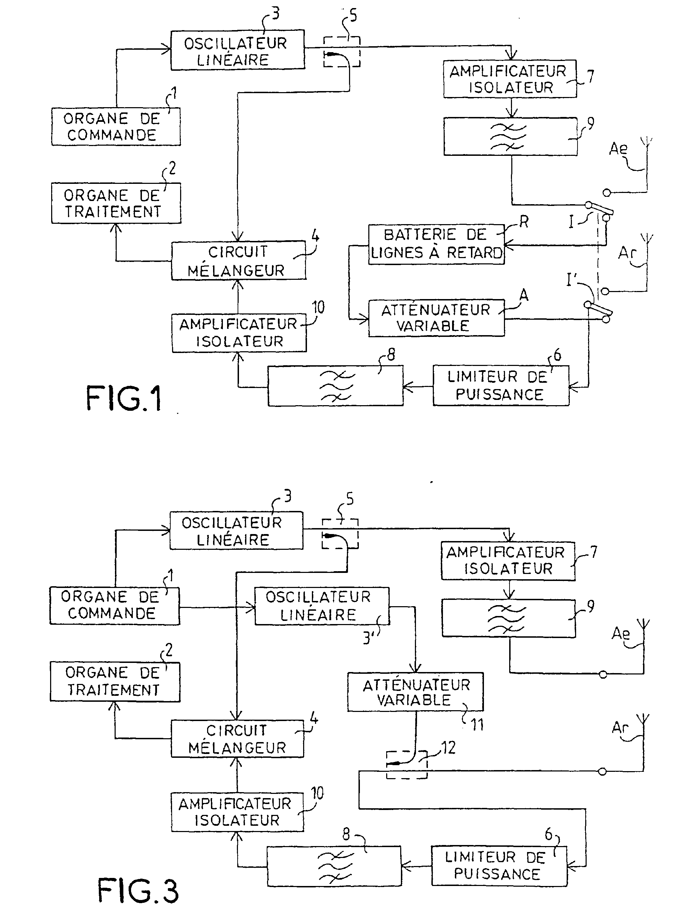

Sur les figures 1 et 3 d'une part, 2, 4, 5 et 6 d'autre part les éléments correspondants sont désignés par les mêmes repères.

La figure 1 montre un radioaltimètre selon l'art connu. Ce radioaltimètre comporte un organe de commande 1 et un organe de traitement 2 dont les fonctions sont réalisées à l'aide d'un microprocesseur. L'organe de commande, 1, commande un oscillateur linéaire, 3, dont le signal de sortie est fourni à un coupleur directif 5 qui, dans l'exemple décrit, est un coupleur à 20 dB. Le coupleur 5 transmet la majeure partie de l'énergie qu'il reçoit vers un amplificateur-isolateur 7 suivi d'un filtre passe-bande 9 et le restant de l'énergie qu'il reçoit sur la première entrée d'un circuit mélangeur 4 dont les signaux de sortie sont fournis à l'organe de traitement 2. Une antenne d'émission Ae est couplée à la sortie du filtre 9 à travers la première galette I d'un commutateur double, II', à deux positions.

Le radioaltimètre selon la figure 1 est relié à une antenne de réception Ar et cette antenne est couplée à la seconde entrée du circuit mélangeur 4 par, en série, la seconde galette I' du commutateur double, un limiteur de puissance 6, un filtre passe-bande 8 et un amplificateur isolateur 10.

Dans le cas de l'exemple décrit à l'aide de la figure 1, l'oscillateur linéaire est commandé pour fournir un signal dont la fréquence varie en dents de scie d'une valeur F1 à une valeur F2, avec un palier à la fréquence basse, F1.

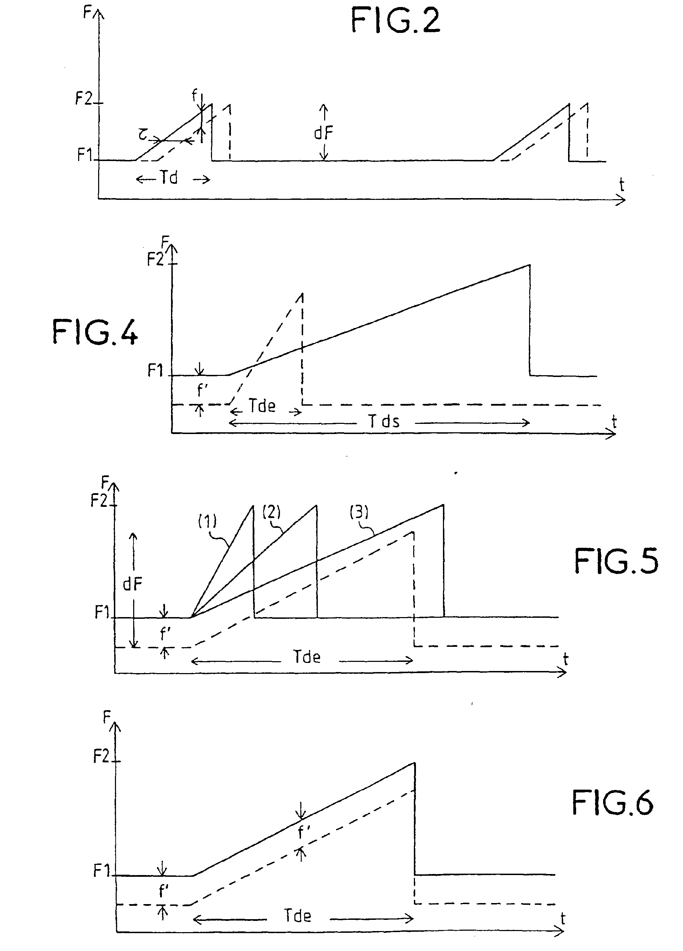

La figure 2 est un graphique qui donne en trait plein la variation dans le temps de la fréquence de l'onde émise par le radioaltimètre de la figure 1 et en trait interrompu la variation dans le temps de la fréquence de l'onde réfléchie par le sol et reçue par l'antenne de réception Ar ; la seconde courbe correspond à la première mais décalée du temps $\tau$ que met l'onde pour un aller et retour avec réflexion sur le sol. Comme il a été indiqué au début de ce document, la hauteur h que mesure le radioaltimètre est donnée par la formule

$$h = Td \cdot f \cdot c/2 \cdot dF$$

les grandeurs Td, f et dF sont repérées sur la figure 2 : Td durée d'une dent de scie c'est-à-dire durée de modulation, f fréquence de battement entre l'onde émise et l'onde réfléchie par le sol, dF largeur de la bande de fréquences parcourue par les dents de scie.

Dans l'exemple décrit l'oscillateur linéaire 3, tout en conservant une largeur dF constante pour la bande de fréquences parcourue par les dents de scie, est programmé pour avoir des durées Td de dent de scie telles que les fréquences de battement dues aux ondes réfléchies se produisent à l'intérieur de la bande de fréquences dans laquelle l'organe de traitement effectue sa mesure ; dans l'exemple décrit cette bande s'étend de 40 à 110 kHz et les fréquences de battement sont amenées à 85 kHz. Pour ce type de fonctionnement la pente dF/Td de la dent de scie est modifiée progressivement en faisant varier Td, jusqu'à ce que les fréquences de battement dues à la voie d'émission se produisent entre 40 et 100 kHz, puis elles sont amenées à 85 kHz où elles sont étudiées.

Avec un radioaltimètre comme celui de la figure 1 il est connu, pour vérifier si les hauteurs mesurées sont exactes, d'utiliser un banc de test fait, comme indiqué sur la figure 1, d'une batterie de lignes à retard, R, suivie d'un atténuateur variable, A. Le commutateur double II' a été dessiné sur la figure 1 pour montrer que, lors d'un test d'étalonnage, les antennes sont débranchées et que la sortie du filtre 9 est reliée, via la batterie de lignes à retard et l'atténuateur, à l'entrée du limiteur de puissance 6 ; en général ce commutateur n'existe pas et le test est effectué en débranchant manuellement les antennes pour les remplacer par les éléments R et A. L'étalonnage consiste à vérifier que les hauteurs qu'indique le radioaltimètre sont exactes ; pour cela un signal est émis de façon habituelle mais au lieu qu'il arrive à la seconde entrée du circuit mélangeur 4 en passant par l'antenne Ae, une réflexion sur le sol et l'antenne Ar, il y arrive en passant par l'une des lignes à retard de la batterie de lignes à retard R. Les lignes de la batterie R sont des lignes dont le retard est connu avec précision. Si donc r est le retard occasionné par celle des lignes qui est utilisée pour effectuer l'étalonnage, la valeur de la hauteur mesurée hm par le radioaltimètre doit être égale à la valeur calculée hc :

$$hc = r.c/2$$

cette équation s'obtient, partant de l'équation h = Td.f.c/2.dF vue plus avant, en tenant compte de l'égalité f/$\tau$ = dF/Td qui ressort de la figure 2 et en remplaçant $\tau$ par r dans cette égalité, ce qui donne f = dF.r/Td. Si hm est différent de hc, la valeur hm est corrigée et soit les valeurs que fournira par la suite le radioaltimètre seront corrigées proportionnellement, soit plusieurs valeurs sont mesurées et calculées avec différentes lignes à retard et les valeurs que fournira le radioaltimètre par la suite seront corrigées par extrapolation ; il est à noter cependant que si les valeurs mesurées diffèrent trop des valeurs calculées en fonction des valeurs des retards des lignes à retard utilisées, une recherche de dérive voire de déréglage du radioaltimètre doit être effectuée. Ces bancs de test présentent des imperfections, voire des défauts, qui, dans le spectre du signal fourni par le circuit mélangeur 4, ajoutent des raies parasites à la raie qui est produite par le battement entre l'onde émise et l'onde réfléchie par le sol à la verticale du radioaltimètre.

La figure 3 montre comment modifier le radioaltimètre de la figure 1 pour effectuer un étalonnage sans le banc de test fait des éléments R et A et avec le commutateur II' remplacé par des courts-circuits entre d'une part le filtre 9 et l'antenne Ae et d'autre part l'antenne Ar et le limiteur de puissance 6.

La modification consiste en l'ajout de deux éléments disposés en série : un oscillateur linéaire auxiliaire, 3', commandé par l'organe de commande 1, un coupleur directif 12 qui, dans l'exemple décrit est un coupleur à 20 dB. Le coupleur 12 est inséré entre l'antenne Ar et le limiteur de puissance 6 ; il transmet vers le limiteur 6, la majeure partie de l'énergie qu'il reçoit en provenance de l'oscillateur 3'. En plus un atténuateur variable 11 peut être inséré entre les éléments 3' et 12, afin de tester la sensibilité du radioaltimètre.

Avec le radioaltimètre ainsi modifié l'étalonnage s'effectue en étapes successives, comme suit :

1. mesure préalable, par le radioaltimètre, de la hauteur hs par rapport au sol ; quand cette valeur est obtenue l'oscillateur 3 délivre des dents de scie d'une certaine durée de modulation qui sera notée Tds dans ce qui suit ; l'oscillateur auxiliaire 3' n'est pas en fonctionnement pendant cette mesure qui est donc une mesure classique,

2. choix d'une durée Tde de modulation de l'oscillateur 3' différente de Tds ce qui, comme décrit dans ce qui suit, permet de calculer une hauteur étalon he qui est une hauteur fictive différente de hs ; ce choix est dicté, dans les étapes suivantes, par un problème de séparation des fréquences de battement occasionnées les unes par les signaux provenant de l'antenne Ar et les autres par les signaux provenant de l'oscillateur auxiliaire 3' ; pour l'opération d'étalonnage décrite ci-après il va être supposé que la hauteur étalon choisie, he, est celle obtenue avec une largeur de dent de scie égale à Tds/4.

3. mise en route de l'oscillateur auxiliaire 3' avec un signal en dents de scie dont les dents de scie sont en synchronisme avec les dents de scie de l'oscillateur 3, dont l'excursion de fréquence des dents de scie, dFe est, de préférence sans que cela soit indispensable, la même que pour l'oscillateur 3 mais avec un palier des dents de scie décalé vers le bas, ou vers le haut, d'une valeur notée f' dans ce qui suit ; dans l'exemple décrit le décalage est de 85 kHz vers le bas - la durée de modulation Tde des dents de scie de l'oscillateur auxiliaire est prise égale à Tds/4 où Tds est, comme indiqué plus avant, la durée de modulation des dents de scie de l'oscillateur 3 quand la mesure selon la première étape a été obtenue,

- la figure 4 est un graphique qui représente le signal en dents de scie susvisé, en trait plein pour l'oscillateur 3 et en trait interrompu pour l'oscillateur 3'

4. la durée de modulation Tde des dents de scie de l'oscillateur auxiliaire 3' est maintenue fixe tandis que celle de l'oscillateur 3 est augmentée par bonds de 2, à partir d'une valeur très faible devant Tde, et cela jusqu'à obtenir, par battement avec le signal de l'oscillateur 3 un signal dans la fenêtre d'analyse qui, comme il a été vu précédemment, va de 40 à 110 kHz dans l'exemple décrit ; pendant toute la durée du test la fenêtre d'analyse n'est ouverte que lorsque les dents de scie de l'oscillateur auxiliaire et principal se recouvrent,

- la figure 5 illustre cette recherche avec, en trait interrompu, le signal de l'oscillateur auxiliaire 3' et, en trait plein, trois signaux successifs (1), (2), (3) délivrés par l'oscillateur 3 ; le troisième signal (3) est celui qui donne un battement dans la fenêtre d'analyse. Il est à remarquer que sur les figures 5 et 6 l'échelle des temps a été multipliée par trois par rapport à la figure 4 afin de rendre les graphiques plus clairs,

5. la largeur des dents de scie de l'oscillateur 3 est ajustée de manière que le battement se produise à 85 kHz dans la fenêtre de mesure ; une mesure h' est donnée par le radioaltimètre,

- la figure 6 illustre cet ajustement avec, toujours, le signal de l'oscillateur 3 en trait plein et le signal de l'oscillateur auxiliaire 3' en traits interrompus,

6. l'organe de traitement a connaissance des valeurs f' et Tde/dFe qui sont des valeurs imposées par l'organe de commande 1 ; la hauteur étalon choisie est calculée he = Tde.f'.c/2.dFe ; la valeur h' est comparée à cette valeur étalon he ; si h' est différent de he une correction peut être appliquée au radioaltimètre comme indiqué plus avant, selon l'art connu, à savoir par un coefficient de proportionnalité ou par extrapolation si au moins deux étalonnages sont effectués ; étant entendu que si une mesure h' fournie par le radioaltimètre est trop différente de la hauteur étalon correspondante, une recherche de dérive voire de déréglage du radioaltimètre doit être effectuée pour y porter remède.

Il est à noter que l'étalonnage peut aussi bien être effectué avec des durées de modulation Tde de la dent de scie d'étalonnage inférieure à la durée Tds obtenue lors de la mesure préalable de distance du sol, que supérieures à Tds. Il faut seulement que l'organe de traitement 2 soit en mesure de distinguer les battements dus au signal réfléchi par le sol des battements dus au signal provenant de l'oscillateur auxiliaire ; Tde ne doit donc pas être trop proche de Tds. De plus, pour faciliter la recherche des battements dus au signal provenant de l'oscillateur auxiliaire, il est préférable, dans l'étape 4, d'éviter de rencontrer les battements dus au signal réfléchi par le sol ; c'est pourquoi, dans l'exemple décrit ou Tde est inférieure à Tds, la quatrième étape s'effectue en faisant croître la durée de modulation de l'oscillateur 3, tandis que, si Tde avait été choisi supérieure à Tds, la quatrième étape aurait commencé avec une durée de modulation de l'oscillateur 3 supérieure à Tds puis cette durée de modulation de l'oscillateur 3 aurait été progressivement réduite.

Il est à remarquer que aussi bien lorsque les excursions en fréquence des deux oscillateurs 3, 3' sont égales que lorsqu'elles sont différentes, la valeur de pente Td/dF est, après ajustement de l'oscillateur 3, la même pour les deux oscillateurs, et que c'est cette valeur qui rentre dans le calcul de la hauteur étalon : h = f.c.Td/dF.2.

Ce principe reste valable pour tous les systèmes radioaltimétriques FW/CW. Suivant le principe de fonctionnement on ajustera la différence de fréquence fe entre les deux oscillateurs, ou encore l'excursion de fréqence dFe, afin d'obtenir la hauteur désirée pour l'étalonnage.

Le radioaltimètre selon la figure 3 permet également d'effectuer des tests de sensibilité ; pour cela, alors que l'atténuateur variable 11 a un coefficient d'atténuation de 1 et que le radioaltimètre a détecté le battement dû à l'oscillateur auxiliaire, le coefficient d'atténuation est réduit pour tendre vers 0 et la valeur qu'il présente, au moment où le signal de battement dû à l'oscillateur auxiliaire disparaît, constitue une valeur de mesure de sensibilité.

En d'autre termes, pour effectuer un test de sensibilité du radioaltimètre, il consiste, quand le battement à la fréquence f a été trouvé, à réduire brutalement puis augmenter progressivement l'amplitude du signal auxiliaire jusqu'à ce que le radioaltimètre puisse de nouveau fournir la hauteur mesurée h'.

**Revendications**

1. Méthode d'étalonnage conçue pour un radioaltimètre de type FM/CW comportant un oscillateur produisant une onde modulée linéairement en fréquence (3) pour fournir un signal en dents de scie, avec une liaison vers une antenne d'émission, Ae, un circuit mélangeur (4) avec deux liaisons respectivement vers l'oscillateur et vers une antenne de réception et un organe de traitement (2) pour traiter les signaux de sortie du circuit mélangeur, **caractérisée en ce qu'**elle consiste à injecter, dans la liaison entre l'antenne de réception et le mélangeur, un signal auxiliaire en dents de scie de pente de dents de scie, Td/dF, programmable numériquement, dont les dents de scie sont synchrones de celles de l'oscillateur (3) produisant une onde modulée linéairement en fréquence et dont le palier des dents de scie est décalé d'une valeur, f, donnée par rapport au palier des dents de scie de l'oscillateur (3) produisant une onde modulée linéairement en fréquence, à obtenir, par modification, ou non, de la durée de modulation des dents de scie ou du dF de l'oscillateur (3) un battement à la fréquence f entre les dents de scie de l'oscillateur et du signal auxiliaire de façon que l'organe de traitement fournisse une hauteur mesurée h', et à comparer cette hauteur mesurée avec la hauteur étalon obtenue par le calcul selon la formule h = f.c.Td/dF.2, où c est la vitesse de la lumière.

2. Méthode selon la revendication 1, **caractérisée en ce qu'**elle consiste à prendre la même excursion en fréquence pour les dents de scie de l'oscillateur linéaire (3) et pour les dents de scie du signal auxiliaire.

3. Méthode selon la revendication 1, **caractérisée en ce que**, pour effectuer un test de sensibilité du radioaltimètre, il consiste, quand le battement à la fréquence f a été trouvé, à réduire brutalement puis augmenter progressivement l'amplitude du signal auxiliaire jusqu'à ce que le radioaltimètre puisse de nouveau fournir la hauteur mesurée h'.

4. Méthode selon l'une des revendications 1 ou 2, **caractérisée en ce qu'**elle consiste à prendre la même période de modulation pour les dents de scie de l'oscillateur linéaire (3) et pour les dents de scie du signal auxiliaire.

5. Radioaltimètre de type FM/CW comportant d'une part, en série, un organe de commande (1), un oscillateur produisant une onde modulée linéairement en fréquence (3) et des premiers éléments de couplage (7, 9) pour coupler l'oscillateur à une antenne d'émission (Ae) et d'autre part un circuit mélangeur (4) avec une première entrée couplée à l'oscillateur (3) produisant une onde modulée linéairement en fréquence et une seconde entrée, des seconds éléments de couplage (6, 8, 10) pour coupler une antenne de réception (Ar) à la seconde entrée du circuit mélangeur et un organe de traitement (2) pour traiter les signaux de sortie du circuit mélangeur, **caractérisé en ce que**, pour effectuer un étalonnage du radioaltimètre, il comporte un oscillateur linéaire auxiliaire (3') et un coupleur directif (12) en série, l'oscillateur linéaire auxiliaire (3') étant adapté à fournir un signal auxiliaire en dents de scie de pente de dents de scie, Td/dF, commandé par l'organe de commande (1) et programmable numériquement, les dents de scie étant synchrones de l'oscillateur (3), le palier des dents de scie étant décalé d'une valeur, f, donnée par rapport au palier des dents de scie de l'oscillateur (3) produisant une onde modulée linéairement en fréquence, l'oscillateur (3) et l'oscillateur linéaire auxiliaire (3') étant adaptés pour obtenir, par modification, ou non, de la durée de modulation des dents de scie ou du dF de l'oscillateur (3) un battement à la fréquence f entre les dents de scie de l'oscillateur (3) et du signal auxiliaire de façon que l'organe de traitement fournisse une hauteur mesurée h', cette hauteur étant comparée par l'organe de traitement avec la hauteur étalon obtenue par le calcul selon la formule $h = f.c.Td/dF.2$ où c est la vitesse de la lumière,

l'oscillateur linéaire auxiliaire (3') étant commandé par l'organe de commande (1) et le coupleur (5) étant inséré dans les seconds éléments de couplage.

**6.** Radioaltimètre selon la revendication 5, **caractérisé en ce que**, pour permettre d'effectuer un test de sensibilité, il comporte un atténuateur variable (11) intercalé entre l'oscillateur auxiliaire (3') et le coupleur (12) ou un oscillateur de puissance ajustable regroupant les fonctions de l'atténuateur variable (11) et de l'oscillateur auxiliaire (3').

## Claims

**1.** Method of calibration designed for an FM/CW type radio altimeter comprising an oscillator producing a linearly frequency modulated wave (3) so as to provide a saw-tooth signal, with a link to a transmitting antenna Ae, a mixer circuit (4) with two links respectively to the oscillator and to a receiving antenna and a processing facility (2) for processing the output signals of the mixer circuit, **characterized in that** it consists in injecting, into the link between the receiving antenna and the mixer, a digitally programmable auxiliary saw-tooth signal with saw-tooth slope Td/dF, whose saw-teeth are synchronous with those of the oscillator (3) producing a linearly frequency modulated wave the plateau of whose saw-teeth is offset by a given value, f, with respect to the plateau of the saw-teeth of the oscillator (3) producing a linearly frequency modulated wave, in obtaining, by modification, or otherwise, of the duration of modulation of the saw-teeth or of the dF of the oscillator (3) a beat at the frequency f between the saw-teeth of the oscillator and of the auxiliary signal so that the processing facility provides a measured height h', and in comparing this measured height with the standard height obtained by computation according to the formula $h = f.c.Td/dF.2$, where c is the speed of light.

**2.** Method according to Claim 1, **characterized in that** the same frequency sweep is used for the saw-teeth of the linear oscillator (3) and for the saw-teeth of the auxiliary signal.

**3.** Method according to Claim 1, **characterized in that**, to perform a sensitivity test of the radio altimeter, it consists, when the beat at the frequency f has been found, in suddenly reducing and then gradually increasing the amplitude of the auxiliary signal until the radio altimeter is again able to provide the measured height h'.

**4.** Method according to one of Claims 1 or 2, **characterized in that** the same period of modulation is used for the saw-teeth of the linear oscillator (3) and for the saw-teeth of the auxiliary signal.

**5.** Radio altimeter of FM/CW type comprising on the one hand, in series, a control facility (1), an oscillator producing a linearly frequency modulated wave (3) and first coupling elements (7, 9) for coupling the oscillator to a transmitting antenna (Ae) and on the other hand a mixer circuit (4) with a first input coupled to the oscillator (3) producing a linearly frequency modulated wave and a second input, second coupling elements (6, 8, 10) for coupling a receiving antenna (Ar) to the second input of the mixer circuit and a processing facility (2) for processing the output signals of the mixer circuit, **characterized in that**, to perform a calibration of the radio altimeter,

it comprises an auxiliary linear oscillator (3') and a directional coupler (12) in series,

the auxiliary linear oscillator (3') being adapted so as to provide an auxiliary saw-tooth signal with saw-tooth slope, Td/dF, which signal is controlled by the control facility (1) and is digitally programmable, the saw-teeth being synchronous with the oscillator (3), the plateau of the saw-teeth being offset by a given value, f, with respect to the plateau of the sawteeth of the oscillator (3) producing a linearly frequency modulated wave, the oscillator (3) and the auxiliary linear oscillator (3') being adapted to obtain, by modification, or otherwise, of the duration of modulation of the saw-teeth or of the dF of the oscillator (3) a beat at the frequency f between the saw-teeth of the oscillator (3) and of the auxiliary signals so that the processing facility provides a measured height h', this measured height being compared by the processing facility with the standard height obtained by computation according to the formula $h = f.c.Td/dF.2$, where c is the speed of light,

the auxiliary linear oscillator (3') being controlled by the control facility (1) and the coupler (5) being inserted into the second coupling elements.

**6.** Radio altimeter according to Claim 5, **characterized in that**, to make it possible to perform a sensitivity test, it comprises a variable attenuator (11) interposed between the auxiliary oscillator (3') and the coupler (12) or an oscillator of adjustable power grouping together the functions of the variable attenuator (11) and of the auxiliary oscillator (3').

**Patentansprüche**

1. Kalibrierverfahren, das für einen Radarhöhenmesser vom Typ FM/CW konzipiert ist, der einen eine linear frequenzmodulierte Welle zur Lieferung eines Sägezahnsignals erzeugenden Oszillator (3), mit einer Verbindung zu einer Sendeantenne, Ae, eine Mischschaltung (4) mit zwei Verbindungen zum Oszillator bzw. zu einer Empfangsantenne, und ein Verarbeitungsorgan (2) aufweist, um die Ausgangssignale der Mischschaltung zu verarbeiten, **dadurch gekennzeichnet, dass** es darin besteht, in die Verbindung zwischen der Empfangsantenne und der Mischschaltung ein digital programmierbares Hilfs-Sägezahnsignal Td/dF einzuspeisen, dessen Sägezähne zu denjenigen des eine linear frequenzmodulierte Welle erzeugenden Oszillators (3) synchron sind und bei dem der Flachteil der Sägezähne um einen gegebenen Wert f gegenüber dem Flachteil der Sägezähne des eine linear frequenzmodulierte Welle erzeugenden Oszillators (3) verschoben ist, durch Veränderung oder nicht der Modulationsdauer der Sägezähne oder des dF des Oszillators (3) eine Schwebung mit der Frequenz f zwischen den Sägezähnen des Oszillators und dem Hilfssignal zu erhalten, damit das Verarbeitungsorgan eine gemessene Höhe h' liefert und diese gemessene Höhe mit der Eichhöhe zu vergleichen, die durch die Berechnung gemäß der Formel h = f.c.Td/dF.2 erhalten wird, wobei c die Lichtgeschwindigkeit ist.

2. Verfahren nach Anspruch 1, **dadurch gekennzeichnet, dass** es darin besteht, die gleiche Frequenz-Exkursion für die Sägezähne des linearen Oszillators (3) und für die Sägezähne des Hilfssignals zu nehmen.

3. Verfahren nach Anspruch 1, **dadurch gekennzeichnet, dass** es, um einen Empfindlichkeitstest des Radarhöhenmessers durchzuführen, darin besteht, wenn die Schwebung mit der Frequenz f gefunden wurde, die Amplitude des Hilfssignals abrupt zu reduzieren und dann progressiv zu erhöhen, bis der Radarhöhenmesser von neuem die gemessene Höhe h' liefern kann.

4. Verfahren nach einem der Ansprüche 1 oder 2, **dadurch gekennzeichnet, dass** es darin besteht, die gleiche Modulationsperiode für die Sägezähne des linearen Oszillators (3) wie für die Sägezähne des Hilfssignals zu nehmen.

5. Radarhöhenmesser vom Typ FM/CW, der einerseits in Reihe ein Steuerorgan (1), einen eine linear frequenzmodulierte Welle erzeugenden Oszillator (3) und erste Koppelelemente (7, 9) aufweist, um den Oszillator mit einer Sendeantenne (Ae) zu koppeln, und andererseits eine Mischschaltung (4) mit einem ersten Eingang, der mit dem eine linear frequenzmodulierte Welle erzeugenden Oszillator (3) gekoppelt ist, und mit einem zweiten Eingang, zweite Koppelmittel (6, 8, 10), um eine Empfangsantenne (Ar) mit dem zweiten Eingang der Mischschaltung zu koppeln, und ein Verarbeitungsorgan (2) aufweist, um die Ausgangssignale der Mischschaltung zu verarbeiten, **dadurch gekennzeichnet, dass** er, um eine Eichung des Radarhöhenmessers durchzuführen, in Reihe einen linearen Hilfsoszillator (3') und einen Richtkoppler (12) aufweist,
wobei der lineare Hilfsoszillator (3') ausgelegt ist, um ein Hilfs-Sägezahnsignal mit Sägezahnrampe Td/dF zu liefern, das vom Steuerorgan (1) gesteuert wird und digital programmierbar ist, wobei die Sägezähne mit dem Oszillator (3) synchron sind, wobei der Flachteil der Sägezähne um einen gegebenen Wert f gegenüber dem Flachteil der Sägezähne des eine linear frequenzmodulierte Welle erzeugenden Oszillators (3) verschoben ist, wobei der Oszillator (3) und der lineare Hilfsoszillator (3') ausgelegt sind, durch Veränderung oder nicht der Modulationsdauer der Sägezähne oder des dF des Oszillators (3) eine Schwebung mit der Frequenz f zwischen den Sägezähnen des Oszillators (3) und dem Hilfssignal zu erhalten, damit das Verarbeitungsorgan eine gemessene Höhe h' liefert, wobei diese Höhe vom Verarbeitungsorgan mit der Eichhöhe verglichen wird, die durch die Berechnung gemäß der Formel h = f.c.Td/dF.2 erhalten wird, wobei c die Lichtgeschwindigkeit ist,
wobei der lineare Hilfsoszillator (3') vom Steuerorgan (1) gesteuert wird und der Koppler (5) in die zweiten Koppelelemente eingefügt ist.

6. Radarhöhenmesser nach Anspruch 5, **dadurch gekennzeichnet, dass** er, um die Durchführung eines Empfindlichkeitstests zu ermöglichen, ein variables Dämpfungsglied (11), das zwischen den Hilfsoszillator (3') und den Koppler (12) eingeschoben ist, oder einen justierbaren Leistungsoszillator aufweist, der die Funktionen des variablen Dämpfungsglieds (11) und des Hilfsoszillators (3') zusammenfasst.

FIG.1

FIG.3

FIG.2

FIG.4

FIG.5

FIG.6